# FASCICULE DE BREVET EUROPEEN

(11) **EP 2 448 787 B1**
(45) Date de publication et mention de la délivrance du brevet: **27.03.2013**
(21) Numéro de dépôt: 10745321.9
(22) Date de dépôt: 25.06.2010
(51) Int. Cl.: B60R 7/06

(54) **DISPOSITIF APTE A FOURNIR UN SUPPORT D'ÉCRITURE DANS UN VÉHICULE AUTOMOBILE ET PLANCHE DE BORD COMPORTANT UN TEL DISPOSITIF**
VORRICHTUNG ZUR BEREITSTELLUNG EINER SCHREIBOBERFLÄCHE IN EINEM MOTORFAHRZEUG SOWIE INSTRUMENTENTAFEL MIT EINER SOLCHEN VORRICHTUNG
DEVICE ABLE TO PROVIDE A WRITING SURFACE IN A MOTOR VEHICLE AND INSTRUMENT PANEL COMPRISING SUCH A DEVICE

(30) Priorité: 30.06.2009 FR 0903194
(43) Date de publication de la demande: 09.05.2012
(73) Titulaire: Renault S.A.S., 92100 Boulogne-Billancourt (FR)
(72) Inventeur: SOUILLAC, Arnaud, F-92310 Sevres (FR)
(86) Numéro de dépôt international: PCT/FR2010/051300
(87) Numéro de publication internationale: WO 2011/001074

(56) Documents cités:
- EP-A- 0 958 961
- DE-A1-102007 036 439
- FR-A- 2 851 530
- GB-A- 2 436 545
- JP-A- 2004 196 090
- US-A- 4 619 386
- US-A- 5 485 944

## Description

La présente invention se rapporte à une planche de bord pour un véhicule automobile qui comporte une tablette pouvant servir de support d'écriture.

Le document FR 2 851 530 décrit une planche de bord de véhicule automobile qui comporte un évidement servant de rangement et fermé par un couvercle sensiblement horizontal. Le couvercle peut pivoter de sa position horizontale, dans laquelle il ferme l'évidement à une position dans laquelle il pend sur la planche de bord, formant une surface inclinée qui peut servir de support d'écriture.

Un autre exemple correspondant au préambule de la revendication est cité dans JP 2004 196 090 A.

Un inconvénient de ce type de planche de bord est l'encombrement du Un inconvénient de ce type de planche de bord est l'encombrement du couvercle en position fermée. La présence du couvercle empêche l'implantation d'autres organes fonctionnels dans la planche de bord.

Aussi, un but de la présente invention est de proposer un nouveau dispositif apte à fournir un support d'écriture dans un véhicule automobile.

Ce but est atteint au moyen d'un dispositif apte à fournir un support d'écriture dans un véhicule automobile. Selon l'invention, ce dispositif comporte :
- une tablette qui est apte à être montée dans un élément de véhicule automobile qui présente une ouverture ;
- des moyens de translation de ladite tablette, entre une position de repos
dans laquelle ladite tablette est logée dans ledit élément de véhicule automobile et une position intermédiaire dans laquelle ladite tablette est sortie dudit élément de véhicule automobile à travers ladite ouverture ;
- des moyens de rotation de ladite tablette pour permettre la rotation de ladite tablette, de ladite position intermédiaire à une position d'utilisation dans laquelle ladite tablette est inclinée pour former un support d'écriture.

L'élément de véhicule automobile peut être une planche de bord ou tout autre élément de l'habillage intérieur du véhicule.

Avantageusement, le dispositif peut comporter un boîtier qui comporte une ouverture et qui est apte à être monté dans ledit élément de véhicule automobile et ladite tablette est montée mobile en translation dans ledit boîtier par l'intermédiaire desdits moyens de translation.

Le boîtier permet de monter facilement le dispositif de l'invention dans n'importe quel élément de véhicule automobile. Il suffit pour cela de ménager dans cet élément de véhicule automobile une ouverture par laquelle on monte le boîtier.

Avantageusement, le dispositif comporte des premiers moyens de blocage des moyens de rotation qui coopèrent avec lesdits moyens de translation pour bloquer la rotation de ladite tablette, quand ladite tablette est dans une position comprise entre ladite position de repos et ladite position intermédiaire et permettre la rotation de ladite tablette quand ladite tablette est dans ladite position intermédiaire.

Ces moyens de blocage permettent d'éviter que la tablette ne frotte contre l'intérieur de l'élément de véhicule automobile ou la paroi supérieure du boîtier quand le dispositif en comporte un. Selon l'invention, le terme boîtier désigne un élément comportant au moins deux parois latérales pour permettre le montage en translation de la tablette.

Selon un mode de réalisation, le dispositif comporte des seconds moyens de blocage des moyens de rotation qui bloquent la rotation de ladite tablette quand ladite tablette est dans ladite position d'utilisation. De tels moyens permettent d'assurer un bon appui sur la tablette lorsque l'utilisateur s'en sert comme support d'écriture.

Le dispositif peut comporter des premiers moyens de blocage desdits moyens de translation qui coopèrent avec lesdits moyens de rotation pour bloquer lesdits moyens de translation pendant la rotation de ladite tablette de ladite position intermédiaire à ladite position d'utilisation. La présence de tels moyens permet de décomposer le mouvement de la tablette ce qui rend son utilisation plus facile pour l'utilisateur qui ne risque pas de déplacer la tablette en translation pendant qu'il la fait pivoter.

Selon l'invention, lorsque la tablette est dans sa position d'utilisation, c'est-à-dire inclinée, la tablette peut être à distance de l'élément de véhicule automobile. Dans ce cas, la tablette est d'abord mise en position intermédiaire, puis pivotée en position d'utilisation.

Avantageusement, lesdits premiers moyens de blocage desdits moyens de translation coopèrent avec lesdits moyens de rotation pour permettre la translation de ladite tablette vers ledit élément de véhicule automobile lorsque ladite tablette est dans ladite position d'utilisation. Dans ce cas, la tablette inclinée est à nouveau rentrée dans l'élément de véhicule automobile ou le boîtier, ce qui permet une meilleure compacité du dispositif en positon d'utilisation. La robustesse est aussi accrue du fait que les moyens de translation sont logés dans l'élément de véhicule automobile ou le boîtier durant l'utilisation de la tablette en tant que support d'écriture.

Le dispositif peut également comporter des seconds moyens de blocage desdits moyens de translation qui coopèrent avec lesdits moyens de rotation pour bloquer la translation de ladite tablette lorsque ladite tablette est dans ladite position d'utilisation et translatée vers ledit élément de véhicule automobile. Ces moyens de blocage permettent de sécuriser la tablette en position d'utilisation, la tablette ne risquant pas de sortir hors du boîtier ou de l'élément de véhicule automobile sous l'effet des chocs et vibrations, par exemple.

Selon un mode de réalisation, lesdits moyens de rotation comportent au moins une fente en arc de cercle et un pion qui coulisse dans ladite fente pour permettre la rotation de ladite tablette, lesdits seconds et/ou premiers moyens de blocage en rotation comportent un coude qui prolonge ladite fente et dans lequel ledit pion est logé quand ladite tablette est, respectivement, dans une position comprise entre ladite position de repos et ladite position intermédiaire, et/ou dans ladite position d'utilisation, ledit pion est apte à venir en butée contre le bord dudit coude pour bloquer la rotation de ladite tablette dans ladite position intermédiaire et les moyens de translation déplacent ledit pion hors dudit coude pour permettre la rotation de ladite tablette.

Selon un second mode de réalisation, lesdits seconds moyens de blocage en rotation comportent une butée basculante, montée coulissante dans ledit élément de véhicule automobile et une patte montée pivotante sous ladite tablette et dans ladite position d'utilisation, ladite butée basculante coopère avec ladite patte pour bloquer la rotation inverse de ladite tablette.

Selon un troisième mode de réalisation qui est combiné avec le premier mode de réalisation, lesdits premiers moyens de blocage des moyens de translation comportent :
- des butées montées mobiles selon une direction sensiblement perpendiculaire à la direction de translation de ladite tablette et couplées auxdits moyens de rotation par l'intermédiaire d'un coulisseau ; et
- des ouvertures ménagées ;
dans ladite position intermédiaire de ladite tablette, lesdites butées coopèrent avec lesdites ouvertures pour bloquer la translation de ladite tablette et lorsque ladite tablette est entraînée en rotation, par un utilisateur, dans ladite position d'utilisation, lesdits moyens de rotation déplacent par l'intermédiaire dudit coulisseau, lesdites butées mobiles hors desdites ouvertures.

Selon un mode de réalisation particulier, lesdits seconds moyens de blocage en translation comportent un bras de blocage monté à rotation sur ladite tablette entre une position non active dans laquelle ledit bras de blocage est sensiblement parallèle à ladite tablette et une position active avec laquelle son extrémité coopère avec un évidement.

La présente invention concerne aussi une planche de bord comportant le dispositif de l'invention.

D'autres particularités et avantages de l'invention ressortiront à la lecture de la description faite ci-après de trois modes de réalisation particuliers de l'invention, donnés à titre indicatif mais non limitatif, en référence aux dessins annexés sur lesquels :
- la Figure 1 représente une vue en perspective d'une planche de bord dans laquelle le dispositif de l'invention est implanté ;
- la Figure 2 représente une vue en perspective d'un premier mode de réalisation de l'invention, la tablette étant en position intermédiaire ;
- la Figure 3 représente le dispositif de la Figure 2, la tablette étant en position intermédiaire mais basculée ;
- la Figure 4 représente le dispositif de la Figure 3, la tablette étant en position d'utilisation ;
- la Figure 5 représente une vue du dessous du dispositif de la Figure 2 ;
- la Figure 6 représente une vue du dessous du dispositif de la Figure 3 ;
- la Figure 7 représente une vue du dessous du dispositif de la Figure 4 ;
- la Figure 8 représente une vue partielle des moyens de rotation, couplés au premiers moyens de blocage en translation d'un second mode de réalisation de l'invention ;
- la Figure 9 représente une vue en coupe longitudinale schématique d'un troisième mode de réalisation de l'invention, la tablette étant en position intermédiaire mais non inclinée ; et
- la Figure 10 représente le dispositif de la Figure 9, la tablette étant en position intermédiaire et inclinée.

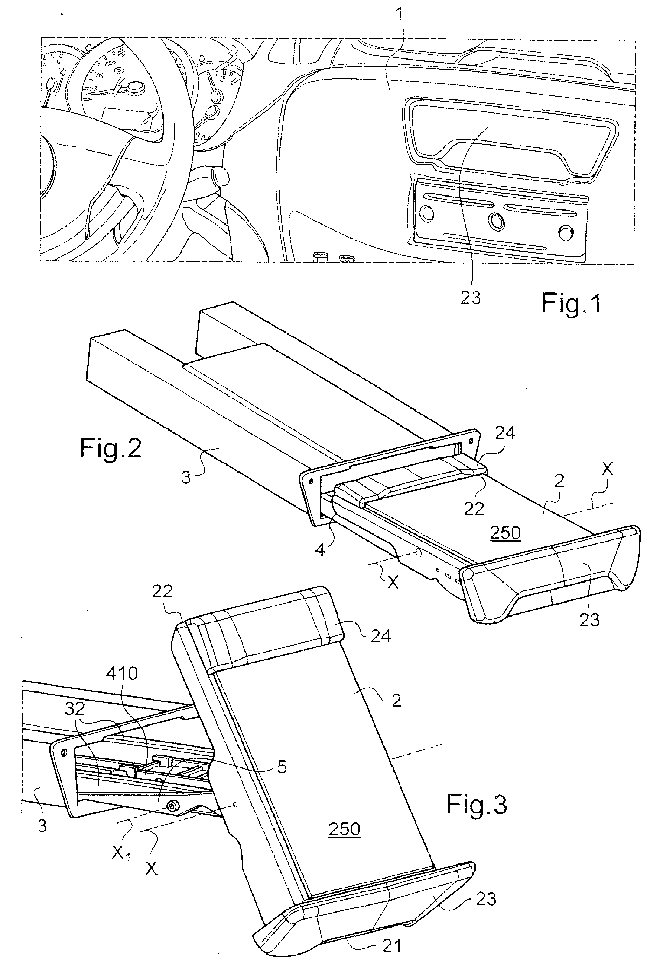

En référence à la Figure 1, la planche de bord de l'invention présente une surface externe 1 au niveau de laquelle affleurent ou font saillie divers éléments fonctionnels. Dans la position de repos de la tablette, seule la tranche de cette dernière est disposée au niveau de la surface externe 1 de la planche de bord. Dans le mode de réalisation ici représenté, une façade 23 recouvre la tranche de la tablette et est visible sur la paroi verticale avant de la planche de bord, à côté du volant du véhicule. La tablette est donc logée à l'horizontale à l'intérieur de la planche de bord.

La Figure 2 représente un premier mode de réalisation particulier de l'invention. Selon ce mode de réalisation, un boîtier 3 contient la tablette 2 et peut être monté dans une cavité ménagée dans une planche de bord. Dans le mode de réalisation particulier ici représenté, la tablette 2 est montée coulissante dans le boîtier 3 au moyen de rails 32, qui sont visibles sur la Figure 3 par l'intermédiaire d'une pièce support 4. La tablette 2 comporte au niveau d'un premier bord dit « bord inférieur », la façade 23 précitée qui s'étend dans un plan sensiblement perpendiculaire à la tablette 2. L'autre bord de la tablette, encore appelé « bord supérieur » comporte une pince 24 qui permet de fixer sur la tablette une feuille de papier ou autre. La paroi de la tablette qui comporte la pince 24 est appelée « paroi fonctionnelle » 250. Sur la Figure 2, la tablette 2 est totalement sortie du boîtier 3, mais reste horizontale. Elle est donc dans sa position intermédiaire mais non pivotée.

La Figure 3 représente la tablette 2 dans sa position intermédiaire pivotée, la pièce support 4 n'a pas été représentée. La tablette 2 est ainsi basculée autour de son axe de rotation X. Le bord inférieur, solidaire de la façade 23, est disposé vers le bas, tandis que le bord supérieur est disposé vers le haut. Dans cette position intermédiaire, la tablette 2 est en bout de course des rails de guidage 32, parallèles, qui coulissent dans le boîtier 3. La tablette 2 est montée coulissante sur les rails de guidage 32 par l'intermédiaire de la pièce support 4 (visible sur la Figure 2) qui est disposée sur les deux rails 32 et qui coulisse entre ces derniers en même temps que la tablette 2. Un coulisseau plan 410 coulisse entre les rails 32. La tablette 2 est montée au niveau du bord avant de la pièce de support 4 ; l'avant étant défini comme la direction située au-delà de l'ouverture du boîtier 3. Un bras de blocage 5 monté pivotant sur chacun des rails 32, permet le blocage en translation de la tablette 2 sur les rails de guidage 32 comme expliqué ultérieurement. Ce bras de blocage 5 s'étend parallèlement au rail 32 et comporte une première extrémité logée dans le boîtier 3 et une seconde extrémité solidaire de la tablette 2. Le bras de blocage 5 est monté pivotant au niveau d'un axe de rotation X1 parallèle à X et situé sensiblement au milieu du rail de guidage 32.

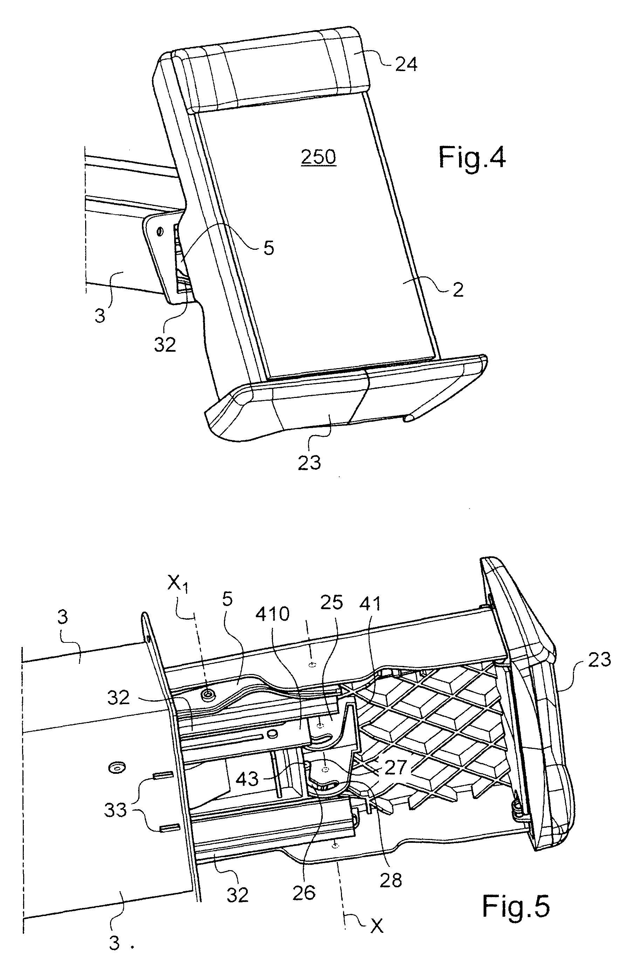

Comme représenté sur la Figure 4, lorsque la tablette 2 est dans sa position d'utilisation, la tablette 2 qui est inclinée comme représentée sur la Figure 3, est poussée vers le boîtier 3. En position d'utilisation, les rails de guidage 32, la pièce support 4 et le coulisseau plan (qui est interne) 410 sont presque entièrement logés dans le boîtier 3. Seule la tablette 2, inclinée pour servir de support d'écriture, est en dehors du boîtier 3 et fait donc saillie au niveau de la face externe de la planche de bord 1, lorsque le boîtier 3 est monté dans la planche de bord.

La Figure 5 représente une vue du dessous de la tablette 2 et du boîtier 3, lorsque la tablette 2 est en position intermédiaire mais non inclinée, comme représenté sur la Figure 2. Le coulisseau plan 410 est disposé sous la tablette 2. Des pattes 25 s'étendent verticalement sous la tablette 2, selon une direction perpendiculaire au plan de la tablette 2. Ces deux pattes 25 sont disposées en face à face et écartées l'une de l'autre selon la largeur de la tablette 2. Chacune des pattes 25 comporte une fente en arc de cercle 26. Cette fente 26 s'étend dans un plan perpendiculaire à la tablette 2 et parallèle à la direction de translation de la tablette, c'est-à-dire aux rails 32. Chaque fente 26 est prolongée par un coude haut 27 et un coude bas 28. Les fentes 26 sont disposées de manière à entourer partiellement l'axe de rotation X de la tablette 2. Un pion 43 solidaire du coulisseau plan 410 est engagé dans chacune des fentes 26 et peut coulisser dans ces dernières pour permettre la rotation de la tablette 2 sous l'action d'un utilisateur. Les coudes, hauts et bas, 27 et 28 forment avec le pion 43 les premiers et seconds moyens de blocage en rotation de la tablette 2. Sur la Figure 5, les pions 43 sont en butée dans les coudes hauts 27 et empêchent ainsi la tablette 2 de pivoter autour de son axe de rotation X en venant en butée contre le bord du coude 27. La tablette 2 reste donc à l'horizontale. Le même effet de blocage est obtenu lorsque le pion 43 est dans le coude bas, la tablette 2 étant alors en position d'utilisation.

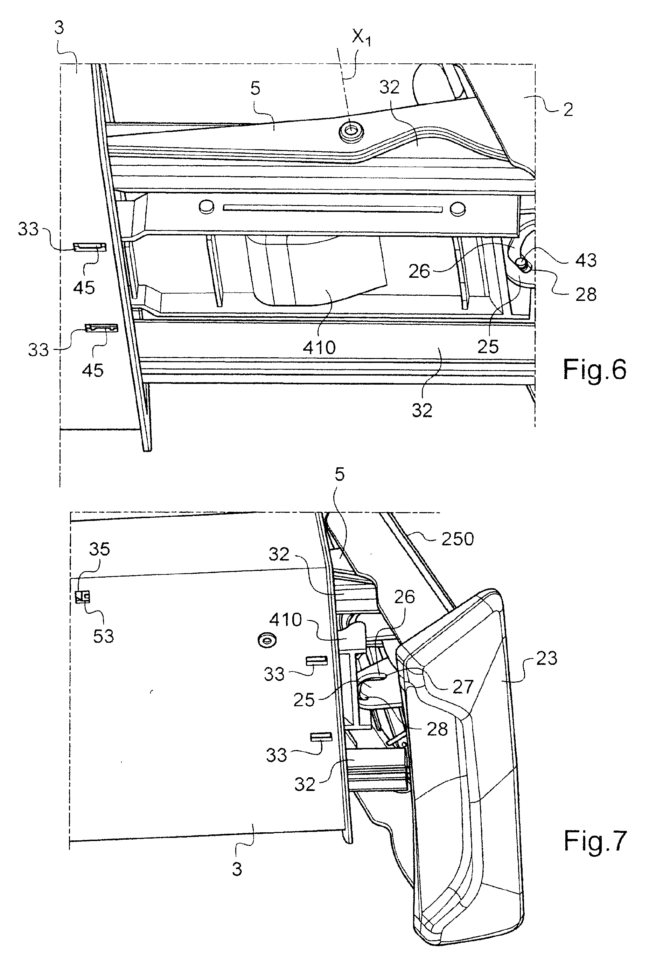

Comme représenté sur la Figure 5, le boîtier 3 comporte, à proximité de son ouverture deux ouvertures 33 qui sont ménagées dans la face inférieure du boîtier 3. Le bord du coulisseau plan 410 qui est logé dans le boîtier 3 comporte deux butées mobiles 45 (voir Figure 6) qui peuvent venir s'emboîter dans ces ouvertures 33 pour bloquer la translation de la tablette 2, lorsque la tablette 2 est en position intermédiaire mais non totalement inclinée pour servir de support d'écriture. Les ouvertures 33 et les butées mobiles 45 forment les premiers moyens de blocage en translation.

La Figure 6, représente une vue partielle de la tablette en position intermédiaire, la tablette 2 étant inclinée pour servir de support d'écriture. Dans cette position, les pions 43 sont en butée dans les coudes bas 28 empêchant la rotation de la tablette 2. Le déplacement des pions 43 en butée dans les coudes bas 28 fait glisser vers l'avant le coulisseau plan 410 et désengage les butées 45 des ouvertures 33. La translation de la tablette 2 est ainsi possible, cette fois en direction du boîtier 3, puisque la tablette 2 est en bout de course à l'extrémité des rails 32.

La Figure 7 représente en détail les seconds moyens de blocage en translation de l'invention. Ces seconds moyens de blocage ne concernent que la position d'utilisation. Le boîtier 3 comporte un évidement (ou ouverture) 35 disposé sur la paroi inférieure du boîtier 3 en arrière des ouvertures 33 et sensiblement à proximité du bord latéral du boîtier 3. Le bras de blocage pivotant 5 comporte au niveau de son extrémité logée dans le boîtier 3 un ergot 53 qui est en contact avec la paroi inférieure du boîtier 3. Lorsque la tablette 2 est inclinée et repoussée vers le boîtier 3, c'est-à-dire lorsqu'elle est en position d'utilisation, l'extrémité du bras de blocage 5 qui comporte l'ergot 53 se trouve au-dessus de l'évidement 35, L'ergot 53 tombe dans l'évidement 35 et empêche ainsi la translation de la tablette 2.

L'utilisation du mode de réalisation précité va maintenant être décrit en référence aux Figures 1 à 7.

La tablette 2 est en position de repos, comme représentée sur la Figure 1. Seule la façade 23 peut être saisie par l'utilisateur, de par sa forme de poignée et par le fait qu'elle fasse légèrement saillie de la surface externe de la planche de bord. L'utilisateur tire sur la façade 23 qui fait office de poignée et fait coulisser les rails 32 dans puis hors du boîtier 3. La pièce support 4 coulisse avec les rails 32. Pendant toute cette translation, les pions 43 restent en butée dans les coudes hauts 27, comme représenté sur la Figure 5. Lorsque l'utilisateur commence à basculer la tablette 2, cette rotation provoque un déplacement du pion 43 dans le coude haut 27, ledit déplacement provoquant une légère translation du coulisseau plan 410 vers l'arrière, ladite translation provoquant la descente des butées 45 dans les ouvertures 33, ce qui bloque la translation de la tablette 2. L'utilisateur peut ainsi, en basculant la tablette 2, déplacer le pion 43 dans la fente 26. Lorsque le pion 43 vient en butée dans le coude bas 28, la rotation de la tablette 2 est stoppée et le coulisseau plan 410 glisse légèrement vers l'avant ce qui a pour effet de désengager les butées 45 des ouvertures 33. La translation de la tablette 2 sur les rails de guidage 32 est ainsi possible en direction du boîtier 3. L'utilisateur pousse donc la tablette 2 qui reste inclinée en position d'utilisation, vers le boîtier 3. L'extrémité du bras de blocage 5 qui est logée dans le boîtier 3 glisse sur la paroi inférieure du boîtier 3 jusqu'à ce que l'ergot 53 se fiche dans l'évidement 35 pour bloquer la tablette 2 en translation, cette dernière étant inclinée en position d'utilisation.

Le déblocage de la tablette 2 s'effectue de la manière suivante. Lorsque la tablette 2 est en position d'utilisation, la rotation est bloquée du fait que le pion 43 est bloqué dans le coude bas 28 de la fente 26. Lorsque l'utilisateur entame la translation de la tablette 2, le bras de blocage 5 bascule de manière à désengager l'ergot 53 de l'évidement 35. En effet, l'ergot 53 a pour fonction d'assurer un point dur mais pas un blocage total : la force exercée par l'utilisateur suffit à désengager l'ergot 53 de part sa forme chanfreinée. La tablette 2 peut donc être sortie en translation hors du boîtier 3, la rotation de la tablette 2 étant bloquée. Lorsque la tablette 2, qui reste en position d'utilisation, c'est-à-dire inclinée, arrive en bout de course (position intermédiaire), l'utilisateur peut faire pivoter la tablette 2 à l'horizontale. Le début du pivotement de la tablette 2 provoque un déplacement du pion 43 dans la fente 26, ledit déplacement provoquant un glissement du coulisseau plan 410 vers l'arrière, ledit glissement provoquant la descente des butées 45 dans les ouvertures 33, ladite descente provoquant un blocage de la translation. Lorsque la tablette 2 est en position de repos et que le pion 43 vient se loger dans le coude haut 27, cela provoque un glissement vers l'avant du coulisseau plan 410, ledit glissement provoquant la remontée des butées 45 hors des ouvertures 33, ladite remontée permettant à nouveau la translation de la tablette 2 vers la position de repos.

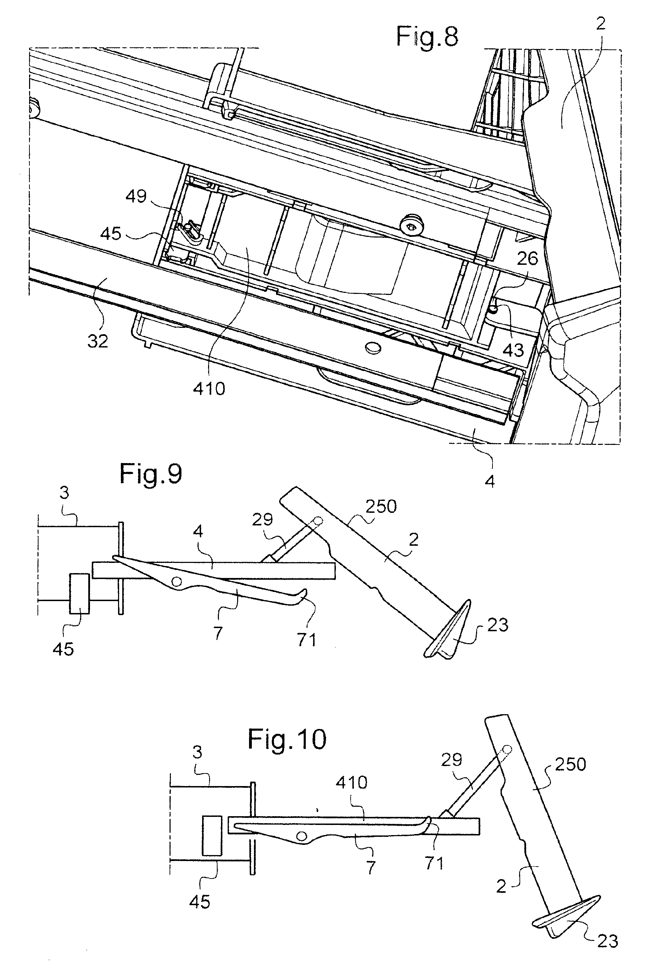

La Figure 8 représente plus en détails la coopération entre les butées mobiles 45 et les moyens de rotation de la tablette 2, dans un second mode de réalisation. Dans ce second mode de réalisation, les butées 45 sont montées mobiles en translation selon une direction verticale, perpendiculaire aux rails 32. Les éléments en commun avec le premier mode de réalisation sont référencé à l'identique. Les fentes 26 ainsi que les coudes, haut et bas 27 et 28, sont ménagés dans la paroi latérale de la tablette 2 qui s'étend perpendiculairement à la paroi fonctionnelle 250 de la tablette. La paroi fonctionnelle 250 étant définie comme la paroi plane qui sert de support d'écriture dans la position d'utilisation. Les pions 43 sont disposés à l'extrémité d'un coulisseau plan 410 monté sur la pièce support 4 et pouvant coulisser selon une direction horizontale dans cette pièce support 4. L'autre extrémité du coulisseau, celle qui est orientée vers le boîtier 3, comporte une fente oblique 49 dans laquelle est engagé un pion solidaire de la butée mobile 45. Ainsi, le déplacement du pion 43 que ce soit du fait direct de l'utilisateur pour mettre en rotation la tablette 2 ou que ce soit du fait d'un mouvement engendré par la translation de la tablette 2, met en mouvement la butée mobile 45. Ainsi, quand le pion 43 est logé dans l'extrémité haute de la fente 26, la butée 45 est remontée dans le boîtier 3, le pion de la butée 45 étant en butée dans l'extrémité haute de la fente oblique 49. Quand le pion 43 est dans le coude bas 28, la butée mobile 45 est descendue vers le fond du boîtier 3, le pion solidaire de la butée mobile 45 étant déplacé dans la fente oblique 49.

La cinématique de ce second mode de réalisation est la suivante. Lorsque la tablette 2 est en positon de repos, l'utilisateur tire sur la façade 23. Le pion 43 est dans le coude haut 27 et bloque la rotation de la tablette, comme dans le premier mode de réalisation. Lorsque la tablette commence à pivoter, le pion 43 descend légèrement et se positionne dans la fente en arc de cercle 26. Ce mouvement provoque un glissement du coulisseau plan 410 vers l'arrière, ce qui provoque la translation des butées 45 via la fente 49, lesdites butées venant se loger dans les ouvertures 33, ce qui bloque la translation de la tablette 2. L'utilisateur fait pivoter la tablette 2 dans sa position d'utilisation. Le déplacement du pion 43 dans la fente 26, jusque dans le coude bas 28, entraîne la translation du coulisseau plan 410 vers l'ouverture du boîtier 3. La butée mobile 45 remonte sous l'effet du déplacement de la fente oblique 49, ce qui libère à nouveau la translation de la tablette 2.

Les Figures 9 et 10 représentent un troisième mode de réalisation de l'invention. Les éléments de ce troisième mode de réalisation qui sont en commun avec le second mode de réalisation décrit ci-dessus sont référencés à l'identique. Ce troisième mode de réalisation comporte une plaque 7 montée pivotante sous le coulisseau plan 410. Cette plaque 7 forme une butée basculante. La plaque 7 est montée mobile en rotation entre une position non active dans laquelle elle est parallèle au coulisseau plan 410 et une position active dans laquelle elle est pivotée vers le bas, sous le coulisseau 410. La plaque 7 comporte au niveau de son bord avant libre un retour 71 sensiblement perpendiculaire à la plaque 7 et orienté vers la tablette 2. Des formes guides, ménagées dans le fond du boîtier 3, guident le mouvement de la plaque 7 en fonction de la longueur de la portion de plaque 7 sortie du boîtier 3.

Outre la plaque 7, les seconds moyens de blocage en rotation comportent aussi une patte 29 formant pendule, montée à rotation à l'arrière de la paroi fonctionnelle 250 de la tablette 2. Cette patte 29 est mobile entre une position non active, dans laquelle elle est repliée derrière la paroi fonctionnelle 250 (donc parallèle aux rails 32), celle-ci étant en position de repos, c'est-à-dire horizontale, et une position active dans laquelle elle forme un angle avec les rails 32 et le coulisseau plan 410. L'extrémité libre de la patte 29 est en contact glissant avec la surface horizontale du coulisseau plan 410.

Le mode de fonctionnement de ce troisième mode de réalisation va maintenant être décrit en référence aux Figures 9 et 10. Le passage de la tablette 2 de la position de repos à la position intermédiaire est le même que celui décrit en référence au premier mode de réalisation. Dans ce mode de réalisation, le blocage en rotation est plus robuste. Il peut être combiné avec les deux autres modes de réalisation décrits. Lorsque la tablette 2 est presque tirée jusqu'à sa position intermédiaire, l'utilisateur fait pivoter la tablette 2 dans sa position d'utilisation. Cette rotation est rendue possible du fait de l'absence de coude haut 27. L'utilisateur pivote la tablette 2 de manière à incliner sa façade 23 vers le bas. Ce mouvement entraîne en translation les butées mobiles 45 qui pénètrent dans les ouvertures 33 pour bloquer la translation de l'ensemble tablette 2 pièce support 4. En fin de translation de la tablette 2, l'avant de la plaque 7 tombe tout d'abord sous le coulisseau plan 410. Le pivotement de la tablette 2 provoque le déplacement de la patte 29 dont l'extrémité libre glisse sur le coulisseau plan 410. Lorsque la tablette 2 parvient en position d'utilisation, les butées 45 remontent des ouvertures 33 ce qui libère la translation de la tablette 2. Dès le début de la translation de la tablette 2, les formes guides provoquent un pivotement de la plaque 7 vers la position horizontale et son retour 71 dépasse au dessus du coulisseau plan 410. L'extrémité de la patte 29 est située à proximité du bord avant du coulisseau plan 410 et vient en butée contre le retour 71 afin d'empêcher la rotation de la tablette 2 de la position d'utilisation à la position intermédiaire (sortie du boîtier 3 mais non inclinée). Comme dans le second mode de réalisation, les moyens de rotation qui coopèrent avec les premiers moyens de blocage en translation que sont les butées mobiles 45 relèvent ces dernières lorsque la tablette 2 est en position d'utilisation. La tablette 2, le coulisseau plan 410 et la plaque 7 qui est horizontale peuvent à nouveau être coulissés dans le boîtier 3. Le fonctionnement est ensuite identique à celui décrit en référence au premier mode de réalisation.

## Revendications

1. Dispositif apte à fournir un support d'écriture dans un véhicule automobile, comportant :
- une tablette qui est apte à être montée dans un élément de véhicule automobile qui présente une ouverture ;
- des moyens de translation (32) de ladite tablette (3), entre une position de repos dans laquelle ladite tablette (2) est logée dans ledit élément de véhicule automobile et une position intermédiaire dans laquelle ladite tablette (2) est sortie dudit élément de véhicule automobile à travers ladite ouverture ;
- des moyens de rotation (26, 43) de ladite tablette (2) pour permettre la rotation de ladite tablette (2), de ladite position intermédiaire à une position d'utilisation dans laquelle ladite tablette (2) est inclinée pour former un support d'écriture,
ledit dispositif étant **caractérisé en ce qu'**il comporte des premiers moyens de blocage (45, 33 ; 410, 49) desdits moyens de translation qui coopèrent avec lesdits moyens de rotation (26, 43) pour bloquer lesdits moyens de translation (32) pendant la rotation de ladite tablette (2) de ladite position intermédiaire à ladite position d'utilisation, et **en ce que** lesdits premiers moyens de blocage (45, 33 ; 410, 49) desdits moyens de translation (32) coopèrent avec lesdits moyens de rotation (26, 43) pour permettre la translation de ladite tablette (2) vers ledit élément de véhicule automobile (3), lorsque ladite tablette (2) est dans ladite position d'utilisation.

2. Ledit dispositif selon la revendication 1 étant **caractérisé en ce qu'**il comporte un boîtier (3) qui comporte une ouverture et qui est apte à être monté dans ledit élément de véhicule automobile et **en ce que** ladite tablette (2) est montée mobile en translation dans ledit boîtier (3) par l'intermédiaire desdits moyens de translation (32).

3. Dispositif selon la revendication 1 ou 2, **caractérisé en ce qu'**il comporte des premiers moyens de blocage (27, 43) des moyens de rotation qui coopèrent avec lesdits moyens de translation (32) pour bloquer la rotation de ladite tablette (2), quand ladite tablette (2) est dans une position comprise entre ladite position de repos et ladite position intermédiaire et permettre la rotation de ladite tablette (2), quand ladite tablette (2) est dans ladite position intermédiaire.

4. Dispositif selon l'une des revendications précédentes, **caractérisé en ce qu'**il comporte des seconds moyens de blocage (28, 43 ; 7, 71, 28) des moyens de rotation (26, 43) qui bloquent la rotation de ladite tablette (2), quand ladite tablette (2) est dans ladite position d'utilisation.

5. Dispositif selon l'une quelconque des revendications précédentes, **caractérisé en ce qu'**il comporte des seconds moyens de blocage (5, 53, 35) desdits moyens de translation (32) qui coopèrent avec lesdits moyens de rotation (26, 43) pour bloquer la translation de ladite tablette (2), lorsque ladite tablette (2) est dans ladite position d'utilisation et translatée vers ledit élément de véhicule automobile (3).

6. Dispositif selon l'une quelconque des revendications 3 à 5, **caractérisé en ce que** lesdits moyens de rotation comportent au moins une fente en arc de cercle (26) et un pion (43) qui coulisse dans ladite fente (26) pour permettre la rotation de ladite tablette (2), **en ce que** lesdits seconds et/ou premiers moyens de blocage en rotation comportent un coude (27 ; 28) qui prolonge ladite fente (26) et dans lequel ledit pion (43) est logé, quand ladite tablette (2) est, respectivement dans une position comprise entre ladite position de repos et ladite position intermédiaire, et/ou ladite position d'utilisation, **en ce que** ledit pion (43) est apte à venir en butée contre le bord dudit coude (27 ; 28) pour bloquer la rotation de ladite tablette (2) et **en ce que** dans ladite position intermédiaire, les moyens de translation (32) déplacent ledit pion (43) hors dudit coude (27 ; 28) pour permettre la rotation de ladite tablette (2).

7. Dispositif selon l'une quelconque des revendications 3 à 6, **caractérisé en ce que** lesdits seconds moyens de blocage en rotation comportent une butée basculante (7), montée coulissante dans ledit élément de véhicule automobile (3) et une patte (29), montée pivotante sous ladite tablette (2) et **en ce que** dans ladite position d'utilisation, ladite butée basculante (7) coopère avec ladite patte (29) pour bloquer la rotation inverse de ladite tablette (2).

8. Dispositif selon l'une quelconque des revendications précédentes, **caractérisé en ce que** lesdits premiers moyens de blocage des moyens de translation comportent :
- des butées (45) montées mobiles selon une direction sensiblement perpendiculaire à la direction de translation de ladite tablette (2) et couplées auxdits moyens de rotation (26, 43, 410, 49) par l'intermédiaire d'un coulisseau (410) ; et
- des ouvertures (33) ;
**en ce que** dans ladite position intermédiaire de ladite tablette (2) lesdites butées mobiles (45) coopèrent avec lesdites ouvertures (33) pour bloquer la translation de ladite tablette (2) et **en ce que**, lorsque ladite tablette (2) est entraînée en rotation, par un utilisateur, dans ladite position d'utilisation, lesdits moyens de rotation (43, 26) déplacent lesdites butées mobiles (45) hors desdites ouvertures (33) par l'intermédiaire dudit coulisseau (410).

9. Dispositif selon l'une quelconque des revendications précédentes, **caractérisé en ce que** lesdits seconds moyens de blocage en translation comportent un bras de blocage (5) monté à rotation sur ladite tablette (2), entre une position non active, dans laquelle ledit bras de blocage (5) est sensiblement parallèle à ladite tablette (2) et une position active avec laquelle son extrémité coopère avec un évidement (35).

10. Planche de bord **caractérisée en ce qu'**elle comporte le dispositif selon l'une quelconque des revendications précédentes.

## Claims

1. Device capable of providing a writing support in a motor vehicle, comprising:
- a tablet that is capable of being mounted in a motor vehicle element which has an opening;
- translation means (32) for translating the said tablet (2) between a rest position in which the said tablet (2) is housed in the said motor vehicle element and an intermediate position in which the said tablet (2) is drawn out of the said motor vehicle element through the said opening;
- rotation means (26, 43) for rotating the said tablet (2) in order to allow the said tablet (2) to be rotated from the said intermediate position to a position of use in which the said tablet (2) is inclined in order to form a writing support,
the said device being **characterized in that** it comprises first locking means (45, 33; 410, 49) for locking the said translation means which interact with the said rotation means (26, 43) in order to lock the said translation means (32) during the rotation of the said tablet (2) from the said intermediate position to the said position of use, and **in that** the said first locking means (45, 33; 410, 49) for locking the said translation means (32) interact with the said rotation means (26, 43) in order to allow the translation of the said tablet (2) to the said motor vehicle element (3) when the said tablet (2) is in the said position of use.

2. Said device according to Claim 1 being **characterized in that** it comprises a housing (3) which comprises an opening and which is capable of being mounted in the said motor vehicle element and **in that** the said tablet (2) is mounted so as to be able to move in translation in the said housing (3) by means of the said translation means (32).

3. Device according to Claim 1 or 2, **characterized in that** it comprises first locking means (27, 43) for locking the rotation means which interact with the said translation means (32) in order to prevent the rotation of the said tablet (2) when the said tablet (2) is in a position between the said rest position and the said intermediate position and to allow the said tablet (2) to rotate when the said tablet (2) is in the said intermediate position.

4. Device according to one of the preceding claims, **characterized in that** it comprises second locking means (28, 43; 7, 71, 28) for locking the rotation means (26, 43) which prevent the said tablet (2) from rotating when the said tablet (2) is in the said position of use.

5. Device according to any one of the preceding claims, **characterized in that** it comprises second locking means (5, 53, 35) for locking the said translation means (32) which interact with the said rotation means (26, 43) in order to prevent the said tablet (2) from translating when the said tablet (2) is in the said position of use and translated to the said motor vehicle element (3).

6. Device according to any one of Claims 3 to 5, **characterized in that** the said rotation means comprise at least one circularly arcuate slot (26) and a pin (43) which slides in the said slot (26) in order to allow the said tablet (2) to rotate, **in that** the said second and/or first rotational locking means comprise an elbow (27; 28) which extends the said slot (26) and in which the said pin (43) is housed, when the said tablet (2) is respectively in a position between the said rest position and the said intermediate position, and/or the said position of use, **in that** the said pin (43) is capable of butting against the edge of the said elbow (27; 28) in order to prevent the said tablet (2) from rotating and **in that**, in the said intermediate position, the translation means (32) move the said pin (43) out of the said elbow (27; 28) in order to allow the said tablet (2) to rotate.

7. Device according to any one of Claims 3 to 6, **characterized in that** the said second rotational locking means comprise a tilting abutment (7) mounted so as to slide in the said motor vehicle element (3) and a tie (29) mounted so as to pivot beneath said tablet (2) and **in that**, in the said position of use, the said tilting abutment (7) interacts with the said tie (29) in order to prevent the reverse rotation of the said tablet (2).

8. Device according to any one of the preceding claims, **characterized in that** the said first locking means of the translation means comprise:
- abutments (45) mounted so as to be able to move in a direction substantially perpendicular to the direction of translation of the said tablet (2) and coupled to the said rotation means (26, 43, 410, 49) by means of a slide (410); and
- openings (33);
**in that**, in the said intermediate position of the said tablet (2), the said movable abutments (45) interact with the said openings (33) in order to prevent the said tablet (2) from translating and **in that**, when the said tablet (2) is rotated by a user into the said position of use, the said rotation means (43, 26) move the said movable abutments (45) out of the said openings (33) by means of the said slide (410).

9. Device according to any one of the preceding claims, **characterized in that** the said second translational locking means comprise a locking arm (5) mounted so as to rotate on the said tablet (2) between an inactive position, in which the said locking arm (5) is substantially parallel to the said tablet (2) and an active position with which its end interacts with a recess (35).

10. Fascia panel, **characterized in that** it comprises the device according to any one of the preceding claims.

## Patentansprüche

1. Vorrichtung, die geeignet ist, eine Schreiboberfläche in einem Motorfahrzeug bereitzustellen, aufweisend:
- eine Platte, die in ein Motorfahrzeugelement, das eine Öffnung aufweist, montiert werden kann;
- Verschiebungsmittel (32) der Platte (2) zwischen einer Ruhestellung, in der die Platte (2) in dem Motorfahrzeugelement aufgenommen ist, und einer Zwischenstellung, in der die Platte (2) aus dem Motorfahrzeugelement durch die Öffnung ausgefahren ist;
- Mittel (26, 43) zum Drehen der Platte (2), um das Drehen der Platte (2) von der Zwischenstellung zu einer Gebrauchsstellung, in der die Platte (2) geneigt ist, um eine Schreiboberfläche bereitzustellen, zu erlauben,
wobei die Vorrichtung **dadurch gekennzeichnet ist, dass** sie erste Blockierungsmittel (45, 33; 410, 49) der Verschiebungsmittel aufweist, die mit den Drehmitteln (26, 43) zusammenwirken, um die Verschiebungsmittel (32) während der Drehung der Platte (2) von der Zwischenstellung zu der Gebrauchsstellung zu blockieren, und dass die ersten Blockierungsmittel (45, 33; 410, 49) der Verschiebungsmittel (32) mit den Drehmitteln (26, 43) zusammenwirken, um die Verschiebung der Platte (2) zu dem Motorfahrzeugelement (3) zu erlauben, wenn die Platte (2) in der Gebrauchsstellung ist.

2. Vorrichtung nach Anspruch 1, **dadurch gekennzeichnet, dass** sie ein Gehäuse (3) aufweist, das eine Öffnung aufweist und das angepasst ist, um in das Motorfahrzeugelement montiert zu werden, und dass die Platte (2) in Verschiebung in dem Gehäuse (3) über die Verschiebungsmittel (32) beweglich installiert ist.

3. Vorrichtung nach Anspruch 1 oder 2, **dadurch gekennzeichnet, dass** sie erste Blockierungsmittel (27, 43) der Drehmittel aufweist, die mit den Verschiebungsmitteln (32) zusammenwirken, um die Drehung der Platte (2) zu blockieren, wenn die Platte (2) in einer Stellung ist, die zwischen der Ruhestellung und der Zwischenstellung liegt und das Drehen der Platte (2) erlaubt, wenn die Platte (2) in der Zwischenstellung ist.

4. Vorrichtung nach einem der vorhergehenden Ansprüche, **dadurch gekennzeichnet, dass** sie zweite Blockierungsmittel (28, 43; 7, 71, 28) der Drehmittel (26, 43) aufweist, die die Drehung der Platte (2) blockieren, wenn die Platte (2) in der Gebrauchsstellung ist.

5. Vorrichtung nach einem der vorhergehenden Ansprüche, **dadurch gekennzeichnet, dass** sie zweite Blockierungsmittel (5, 53, 35) der Verschiebungsmittel (32) aufweist, die mit den Drehmitteln (26, 43) zusammenwirken, um die Verschiebung der Platte (2) zu blockieren, wenn sich die Platte (2) in der Gebrauchsstellung befindet und zu dem Motorfahrzeugelement (3) verschoben ist.

6. Vorrichtung nach einem der Ansprüche 3 bis 5, **dadurch gekennzeichnet, dass** die Drehmittel wenigstens einen Kreisbogenschlitz (26) und einen Stift (43), der in dem Schlitz (26) gleitet, um das Drehen der Platte (2) zu erlauben, aufweisen, dass die zweiten und/oder ersten Drehungsblockierungsmittel ein Winkelstück (27; 28) aufweisen, das den Schlitz (26) verlängert, und in dem der Stift (43) aufgenommen ist, wenn die Platte (2) jeweils in einer Stellung zwischen der Ruhestellung und der Zwischenstellung und/oder der Gebrauchsstellung ist, dass der Stift (43) gegen den Rand des Winkelstücks (27; 28) zum Anschlagen kommen kann, um die Drehung der Platte (2) zu blockieren, und dass die Verschiebungsmittel (32) in der Zwischenstellung den Stift (43) aus dem Winkelstück (27; 28) heraus verlagern, um die Drehung der Platte (2) zu erlauben.

7. Vorrichtung nach einem der Ansprüche 3 bis 6, **dadurch gekennzeichnet, dass** die zweiten Drehungsblockierungsmittel einen Kippanschlag (7) aufweisen, der gleitend in dem Motorfahrzeugelement (3) installiert ist, und eine Pratze (29), die schwenkend unterhalb der Platte (2) installiert ist, und dass der Kippanschlag (7) in der Gebrauchsstellung mit der Pratze (29) zusammenwirkt, um die umgekehrte Drehung der Platte (2) zu blockieren.

8. Vorrichtung nach einem der vorhergehenden Ansprüche, **dadurch gekennzeichnet, dass** die ersten Blockierungsmittel der Verschiebungsmittel Folgendes aufweisen:
- Anschläge (45), die entlang einer Richtung im Wesentlichen senkrecht zu der Verschiebungsrichtung der Platte (2) beweglich installiert und mit den Drehmitteln (26, 43, 410, 49) über eine Gleitführung (410) gekoppelt sind; und
- Öffnungen (33);
dass die beweglichen Anschläge (45) in der Zwischenstellung der Platte (2) mit den Öffnungen (33) zusammenwirken, um die Verschiebung der Platte (2) zu blockieren, und dass die Drehmittel (43, 26) die beweglichen Anschläge (45) aus den Öffnungen (33) über die Gleitführung (410) heraus verlagern, wenn die Platte (2) in Drehung von einem Benutzer angetrieben wird.

9. Vorrichtung nach einem der vorhergehenden Ansprüche, **dadurch gekennzeichnet, dass** die zweiten Verschiebungsblockierungsmittel einen Blockierungsarm (5) aufweisen, der drehend auf der Platte (2) zwischen einer nicht aktiven Position, in der der Blockierungsarm (5) im Wesentlichen zu der Platte (2) parallel ist, und einer aktiven Position, bei der sein Ende mit einer Aussparung (35) zusammenwirkt, installiert ist.

10. Instrumententafel, **dadurch gekennzeichnet, dass** sie die Vorrichtung nach einem der vorhergehenden Ansprüche aufweist.
